# EUROPEAN PATENT SPECIFICATION

(11) **EP 3 102 491 B1**
(45) Date of publication and mention of the grant of the patent: **02.01.2019**
(21) Application number: 15702597.4
(22) Date of filing: 20.01.2015
(51) Int. Cl.: B65B 57/00, B29C 65/82, G01M 3/32

(54) **APPARATUS AND METHOD FOR TESTING PEEL STRENGTH AND LEAK TIGHTNESS OF A PACKAGE COMPRISING A PEEL SEAL**
VORRICHTUNG UND VERFAHREN ZUM TESTEN DER SCHÄLFESTIGKEIT UND DER DICHTIGKEIT EINER PACKUNG MIT EINEM ABSCHÄLBAREN VERSCHLUSS
APPAREIL ET PROCÉDÉ PERMETTANT DE TESTER LA RÉSISTANCE AU PELAGE ET L'ÉTANCHÉITÉ D'UN EMBALLAGE COMPRENANT UNE FERMETURE PELABLE

(30) Priority: 20.01.2014 NL 2012110
(43) Date of publication of application: 14.12.2016
(73) Proprietor: Oxipack B.V., 3992 LL Houten (NL)
(72) Inventor: SMIT, Arjan Tonnis, NL-3941 GP Doorn (NL)
(74) Representative: V.O.
(86) International application number: PCT/NL2015/050036
(87) International publication number: WO 2015/108423

(56) References cited:
- EP-A1- 0 654 656
- EP-A1- 2 287 077
- EP-A2- 0 586 894
- NL-A- 9 300 868
- US-A- 3 369 392
- US-A- 4 002 055
- US-A- 5 513 516
- US-A- 5 528 880

## Description

### TECHNICAL FIELD

The invention relates to an apparatus, a system and a method for testing peel strength and leak tightness of a package comprising a peel seal.

### BACKGROUND OF THE INVENTION

Methods for testing leak tightness of a package are known per se. Methods are known in which the package is placed inside a closed chamber and the chamber is brought to an overpressure or underpressure relative to atmospheric pressure. Next, a change in gas pressure inside the chamber is monitored. The change in gas pressure arises by gas entering or exiting the package as a consequence of a leak in the package.

The sensitivity of the leak detection inter alia depends on an absolute value of the overpressure or underpressure, a size of free space surrounding the package in the chamber, a change (rate) of temperature in the free space, and a sensitivity of the pressure sensor used.

Leak tight packages sometimes are provided with a peel seal. The peel seal can be formed by a foil or membrane covering an openable area of the package. The peel seal normally is adhered to a circumferential area surrounding the openable area. The peel seal can be opened or removed by applying a separating force surpassing the peel strength of the adherent bond between the peel seal and the circumferential area.

Methods for testing peel seal strength are known per se. Methods are known in which the seal is removed by an actuating arm and the tensile force is recorded during seal separation. Another method is to cut the package and seal, and to test the peel strength by separating mechanically with an actuating arm, the cut portion of the seal from the cut portion of the package. Such methods measure the ability of a peel seal to resist separation.

### SUMMARY

It is an object of the invention to provide an apparatus and method for testing peel strength and leak tightness of a package with enhanced accuracy and/or in a reduced amount of time.

Thereto according to the invention is provide an apparatus for testing peel strength and leak tightness of a package having a peel seal according to claim 6. This provides the advantage that the apparatus according to the invention is arranged for determining both the peel strength and the leak tightness of the package. Additionally, this provides the advantage that the peel strength of the package can be determined with a chamber having properties that are advantageous for determining peel strength. For example, the volume of the first chamber is larger than the outer shape of the package. In this case the larger volume allows that the peel seal of the package is free to release. As the pressure of the first chamber is reduced, the pressure acting on the peel seal becomes greater until the peel seal either releases (fails) or appears to be able to withstand the applied pressure (pass). In particular this apparatus is well suited for testing packages with peel seals. In general peel seals, specifically easy peel seals, are easy to remove. Therefore the pressure reduction required to test a peel seal or easy peel seal is relatively small. The peel seal can have a peel strength that corresponds to a threshold underpressure of 500-700 mbar at which the peel seal separates. Nowadays also easy-peel seals are being used. These easy-peel seals can have a peel strength that corresponds to a threshold underpressure of 400-200 mbar at which the peel seal separates. Since these underpressures are moderate, when testing peel seal strength it is not necessary that the volume surrounding the package is minimized.

It is noted that a peel strength test may be a pass or fail test. For example, testing peel strength at a given reduced pressure in the chamber may result in the seal opening, i.e the adhesion of the peel seal yielding. In this case, the change in pressure can be recorded and the seal will be categorized as defective. The seal has failed, and the package under test is removed from the apparatus and possibly discarded or returned to production. On the other hand if the seal holds, for example, the pressure in the chamber remains substantially constant at the given reduced pressure, the seal of the package under test is classified as good. In view of the above a pass/fail test of a peel strength of a package is less susceptible to small changes in measured pressure. In this way the chamber may have a larger shape without degrading detectability of a faulty seal.

The apparatus according to the invention provides the further advantage that the leak tightness of the package can be determined with a chamber having properties that are advantageous for determining leak tightness of a package. For example, the shape of the second chamber is complementary to the outer shape of the package. In this way the size of a free space surrounding the package in the chamber is minimized. Minimizing the free space reduces the volume of gas which is maintained inside the chamber at the overpressure or underpressure. Determining a change in the overpressure or the underpressure due to a leak in the package can then be performed with much greater accuracy and/or in a reduced amount of time.

It is conceivable that the default shape, or starting shape of the chamber when the lid is closed is the first shape. In this way the movable element is only needs to move to the second position after the peel strength test and before the leak test.

The apparatus includes a securing member arranged for securing the peel seal of the package when the movable element is in the second position. In this way, the peel seal of the package is secured when the leak tightness of the package is tested. This may be desirable when testing peel seals and easy peel seals. Testing the leak tightness of the package may require a reduction in pressure in the chamber that would cause a peel seal or easy peel seal to release. By securing the peel seal the leak tightness of the package can be determined by the apparatus without damaging the seal of the package. The securing member can be included by the movable element.

EP2287077A1 relates to a device for closing a package having an upper and lower foil, by evacuating the package, clamping the foils and sealing the foils together using a laser.

US5,528,880A relates to a device for packaging a product in a wrapper made of a material closable by welding. A still open pack is introduced into the interior of the vacuum chamber with side tabs of the packaging material located between welding bars of the vacuum chamber. Once the desired vacuum value has been reached, the welding appliance is activated and the pack is closed in the vacuum chamber.

NL9300868A relates to a method for testing leak tightness of a package by reducing the pressure around the package, exerting a mechanical pressure to the package and determining a deflection of the package under influence of the applied mechanical pressure.

US5,513,516A relates to a closeable test cavity comprising a flexible wall whose shape adapts to the shape of a to be leak tested container. The flexible wall can sealingly contact a portion of the container spaced from a container seal to permit detection of seal leaks.

EP0654656 relates to a device for leak testing closed containers placed into a sealingly closed test cavity. Bowing outwards of flexible wall portions of the container is prevented by projections at the wall of the test cavity which supports such wall portions of the container. Recesses between the projections make sure that the installed pressure in the space between outer surface of container and test cavity wall is dissipated all around the container in spite of the projection.

None of these documents discloses an apparatus or method for testing peel strength and leak tightness of a package including a peel seal, comprising the steps of
- modifying the chamber to have a first volume that is larger than an outer shape of the package, reducing a gas pressure inside the chamber to a first pressure level, determining whether the peel strength of the peel seal is sufficient to withstand the first pressure level, and
- modifying the chamber to have a second volume that is complementary to the outer shape of the package, reducing a gas pressure inside the chamber to a different, second pressure level while securing the peel seal of the package, determining the gas pressure inside the chamber, and determining the leak tightness of the package on the basis of the determined gas pressure inside the chamber.

Optionally, the securing member includes passages to allow an area of the chamber adjacent to the seal to be in fluid communication with an area of the chamber adjacent to the remainder of the package. In this way it is possible to determine the leak tightness of the package as a whole and not only the leak tightness of the seal.

Optionally, the movable element is a plunger. The plunger is capable of varying the shape of the chamber.

Optionally, the securing member is provided on the plunger. For example, the securing member may press on a sealed edge of the package.

Optionally, the apparatus includes a driving member arranged for moving the plunger from the first position to the second position. In this way the movement of the plunger can be controlled by a control unit. Testing can then be carried out automatically.

Optionally, the movable element a membrane, wherein the apparatus includes a second chamber at the side of the membrane opposite the chamber, and wherein the apparatus further is arranged for increasing and/or decreasing a volume of the second chamber. A membrane is an effective means for modifying the shape and/or volume of the chamber.

Optionally, the apparatus further includes a processor arranged for controlling a pressure of gas in the chamber. The controller may thereto control an inflow into and/or an outflow out of the chamber. The controller may use a pressure reading of the pressure sensor for controlling the pressure in the chamber.

Optionally, the processor is arranged for controlling the pressure in the chamber to be at a first level when the movable element is in the first position, and for controlling the pressure in the chamber to be at a different second level when the movable element is in the second position. This allows for the pressure to be automatically set at the first level for peel strength testing, and the pressure to be automatically set at the second level for leak testing.

Optionally, the first level is chosen to be representative of a peel strength of the peel seal to be tested. The first level can be chosen such that only peel seals with insufficient peel strength will release at the first pressure level.

Optionally, the second level is chosen to be lower than the first level. The leak test can then be performed at a lower pressure level than the peel strength test.

Preferably, the receptacle, and optionally the lid, is substantially rigid. Hence it is possible to easily provide the receptacle and/or lid which has the predetermined inner shape complementary to the outer shape of the package. In this way the movable element can easily modify the chamber between the first and second shape. It will be appreciated that it is also possible that the receptacle, and optionally the lid, is semi-rigid or flexible, as long as the receptacle, and optionally the lid, in its stable neutral condition, i.e. when not subjected to overpressure or underpressure, retains its shape complementary to the package. In this case it is conceivable that the movable element acts on an outside surface of the apparatus. The shape or volume of the chamber is then modified by the movable element acting on an outside surface of the apparatus.

The package may be substantially rigid. Hence it is possible to easily provide the receptacle and/or lid which has the predetermined inner shape complementary to the outer shape of the package. It is also possible that the package is somewhat flexible. In that case the receptacle and/or lid has the predetermined inner shape complementary to the outer shape of the package in its stable neutral condition. It is also possible that the receptacle and/or lid has the predetermined inner shape complementary to an average of desired outer shape of the somewhat flexible package.

The processor is further arranged to receive a value of gas pressure inside the chamber from the pressure sensor. The processor can be further arranged for determining the peel strength of the package, e.g. from an absolute value of the gas pressure or from a change in time of the gas pressure. The processor can be further arranged for determining whether a peel seal of a package is good or faulty.

The processor is arranged for determining whether a package under test is leaking or airtight, e.g. from an absolute value of the gas pressure or from a change in time of the gas pressure. It will be appreciated that in many cases leak tightness is a relative parameter defined by the amount of inflow or outflow of gas per unit time. Therefore, the processor is arranged to determine whether or the package is leaking or tight by comparing a determined leak tightness (inflow or outflow per unit time) with a predetermined threshold value. The same applies for determining the peel strength of the package.

The processor may be arranged for receiving a plurality of values of gas pressure inside the chamber from the pressure sensor, each value associated with a separate measurement from the pressure sensor when measuring the pressure surrounding one and the same package. The processor can then determine an average value of the plurality of values so as to increase accuracy and/or reliability of the measurement.

It is also possible that the processor is arranged for receiving a plurality of values of gas pressure inside the chamber from the pressure sensor, the values associated with separate measurements from the pressure sensor when measuring the pressure surrounding at least two mutually different packages. The processor can then compare the value(s) associated with a first package with the value(s) associated with a second package. From the comparison the processor can determine whether or not one of the at least two packages is leaking and/or whether or not the peel seal of one of the at least two packages is defective. It will be appreciated that the first or second package with highest determined inflow or outflow may be selected for rejection. It will be appreciated that when the peel strength and/or the determined leak tightness of more than two packages is compared in this way, it is easier to determine a deviating peel strength and/or leak tightness which may be indicative of a package to be rejected. It is possible that the at least two packages are subjected to peel strength determination and/or leak tightness determination consecutively in the same chamber. Alternatively, or additionally, a plurality of packages may be subjected to peel strength and/or leak tightness determination in a plurality of chambers, e.g. simultaneously.

It is noted that apparatus for testing leak tightness of a package are known in which the chamber is formed by two flexible sheets, which adapt to the shape of the package when gas is pumped out of the chamber formed around the package between the two sheets. It will be appreciated, however, that in these apparatus a considerable amount of gas has to be removed from the chamber before the sheets are adapted to the shape of the package. As such, these known apparatus require much longer pumping times and more power pumps than the apparatus of the present invention in which the receptacle, and optionally the lid, have a persistent shape (substantially) complementary to the outer shape of the package as described herein. Also, these apparatus in which the chamber is formed by two flexible sheets are not suitable for testing peel strength of the package.

Optionally the receptacle has a larger heat capacity than the package. This provides the additional advantage that the temperature of the gas in the free space is mainly determined by the temperature of the receptacle and to a much lesser degree by a temperature of the ambient air or the temperature of the package. Hence, the temperature of the package or the ambient air has a reduced impact on the accuracy of the determination of the pressure inside the free space, and thus on the accuracy of the peel strength and leak detection. Also, a waiting time, required for allowing the temperature of the gas in the free space to reach an equilibrium value is thus reduced.

Optionally the receptacle comprises, or is substantially made of, a material having a large specific heat capacity, such as brass or another metal. Preferably, said material has a larger specific heat capacity than the material of which the package is made.

In an advanced embodiment, the receptacle is provided with a heating and/or cooling system. The heating and/or cooling system can include a temperature controller. The temperature controller can be arranged for maintaining the temperature of the receptacle at a predetermined or set temperature. The receptacle may be maintained at ambient temperature or at an elevated or decreased temperature. E.g. in case the package tend to have a intrinsic temperature that deviates from ambient temperature, for instance due to a recent step in the manufacturing process of the package, it can be of advantage for the temperature controller to maintain the receptacle at, or close to, the intrinsic temperature.

It will be appreciated that it is also possible that the lid has a larger heat capacity than the package. It is also possible that the lid comprises, or is substantially made of, a material having a large specific heat capacity, such as brass or another metal. It is also possible that the material of the lid has a larger specific heat capacity than the material of which the package is made. It is also possible that the lid is provided with a heating and/or cooling system. The heating and/or cooling system of the lid can include a temperature controller similar to temperature controller of the heating and/or cooling system of the receptacle, or be controlled by the same temperature controller that controls the heating and/or cooling system of the receptacle.

Optionally the receptacle, or the lid, has a larger thermal conductivity than the package. This too provides the additional advantage that the temperature of the gas in the free space is mainly determined by the temperature of the receptacle, or the lid, and to a much lesser degree by a temperature of the ambient air or the temperature of the package. Preferably, the receptacle, or the lid has a larger heat capacity and larger thermal conductivity than the package.

Optionally, the receptacle or the lid comprises, or is substantially made of, a material having a large thermal conductivity, such as brass or another metal. Preferably, said material has a larger thermal conductivity than the material of which the package is made.

Optionally, the pressure sensor is mounted to the receptacle thermally insulated from the receptacle. The pressure sensor can also be mounted to the lid thermally insulated from the lid.

Optionally, a surface of the inner shape of the receptacle has a surface texture to ensure the presence of a coherent inner space between the receptacle and the package. Hence, when the package is inserted into the chamber, even if the package abuts against the receptacle, an inner space is maintained between the package and the receptacle so as to allow gas to move. This prevents gas from being trapped in undesired pockets between package and the receptacle. Hence, gas can easily be pumped out of the inner space for reducing the pressure in the inner space.

Optionally, the surface of the inner shape of the receptacle is provided with at least one of a mesh, a porous foil, a sintered foil, a napped foil, grooves, ridges and bosses. These provide simple ways to provide the inner space. It will be clear that it is preferred that such surface is provided in combination with the large specific heat capacity of the receptacle and/or the temperature control.

It will be appreciated that the surface of the inner shape of the lid may be identical, or similar, to the surface of the inner shape of the receptacle.

Optionally, the apparatus is further provided with a temperature sensor for determining the temperature of gas inside the chamber. Preferably, the processor is arranged to receive a value of gas temperature inside the chamber from the temperature sensor. The processor is further arranged for correcting the value of the gas pressure on the basis of the value of the gas temperature. Such correcting may include calculating the equivalent pressure at a reference temperature, e.g. 20 °C.

Optionally, the temperature sensor is mounted to the receptacle thermally insulated from the receptacle. The temperature sensor can also be mounted to the lid thermally insulated from the lid. This provides the advantage that the temperature sensor measures the true temperature of the gas in the chamber. Also, this allows the temperature sensor to react to changes in gas temperature much faster.

Optionally the apparatus is included in a production line for production of a plurality of the package. Herein, the processor may be arranged for generating a selection signal representative of whether or not a package under test is airtight and/or whether or not the peel seal of the package under test is satisfactory. Thereto, the processor may be arranged to compare the (change over time of the) gas pressure in the chamber with a predetermined threshold value, while the package is in the chamber at an underpressure or overpressure. The production line may be arranged to reject or accept the package on the basis of the selection signal. Thereto the production line may comprise a rejection unit.

Optionally, the apparatus according to the invention is arranged for testing the peel strength and the leak tightness of food container or a beverage container, preferably containing a food product or a beverage, respectively. Thee beverage container can be a single serving beverage container. Optionally the apparatus according to the invention is arranged for testing the peel strength and the leak tightness of a filled wine glass provided with a peel seal.

The invention also relates to a system for testing peel strength and leak tightness of a package comprising an apparatus according to the invention and a package in combination.

The invention also relates to a method for testing peel strength and leak tightness of a package including a peel seal according to claim 1.

Advantageously, such method allows for more accurate and/or faster peel strength and leak testing of the package.

This method provides the advantage that the peel strength of the package and the leak tightness of the package are both tested under conditions which are favourable for the respective test. The peel strength test is performed when the shape of the chamber is larger than the package thus allowing a peel seal of the package under test to release if the peel strength is insufficient. The leak tightness test is performed when the shape of the chamber is complementary to the outer shape of the package. It will be appreciated that the peel strength test may be a pass/fail test. In other words the peel strength is satisfactory or not.

The method further comprises the step of securing the peel seal of the package during the step of reducing the gas pressure to the second level and determining the gas pressure inside the chamber. This way, release of the peel seal during leak testing can be prevented.

Optionally, the peel strength of the package is determined prior to determining the leak tightness of the package. Optionally, the method further includes comparing the peel strength of the package to a predetermined threshold, and determining the leak tightness of the package if the peel strength is greater or equal to than the predetermined threshold. In this way, a package with insufficient peel strength is not tested for leak tightness. Optionally, the method may further include discarding the package if the peel strength is less than the predetermined threshold.

It will be appreciated that determining the peel strength of a package comprises the steps of modifying the chamber to have a first shape that is larger than an outer shape of the package, reducing a gas pressure inside the chamber, determining the gas pressure inside the chamber, and optionally determining a measure of the peel strength of the package. Furthermore, it will be appreciated that determining the leak tightness of a package comprises the steps of modifying the chamber to have a second shape that is complementary to the outer shape of the package, reducing a gas pressure inside the chamber, determining the gas pressure inside the chamber, determining the leak tightness of the package on the basis of the determined gas pressure inside the chamber.

Optionally, the method further includes determining the peel strength on the basis of the determined gas pressure inside the chamber. It is also conceivable that an unsatisfactory peel strength is detected by an optical camera.

Optionally, after the step of placing the package inside the receptacle, the receptacle remains closed for the remainder of the method. In this way the shape of the chamber can be varied without the receptacle being opened.

It is noted that the apparatus, system and method, are especially suitable for determining the seal strength and leak tightness of a food or beverage container, such as a single serving beverage sealed by a peel seal, or for example a glass of wine. Single serving sealed wine glasses are commonly offered during the food/beverage service on planes and trains. During the food/beverage service, conditions may be bumpy. As there is no need to pour the beverage, the number of spills can be reduced. However, it is pertinent that the strength of seal of the single serving beverages is appropriate and that the seal itself is leak tight for hygienic and health safety reasons.

### BRIEF DESCRIPTION OF THE DRAWINGS

The invention will now be further elucidated by means of non-limiting examples referring to the drawings, in which
Figure 1 is a schematic representation of an apparatus according to the invention;
Figure 2 is a schematic representation of an apparatus according to the invention;
Figure 3 is a schematic representation of an apparatus according to the invention;
Figure 4 is a schematic representation of an apparatus according to the invention;
Figure 5 is a schematic representation of an apparatus according to the invention;
Figure 6 is a schematic representation of an apparatus according to the invention;
Figure 7 is a schematic representation of an apparatus according to the invention; and
Figure 8 is a schematic representation of a detail of an apparatus according to the invention.

### DETAILED DESCRIPTION

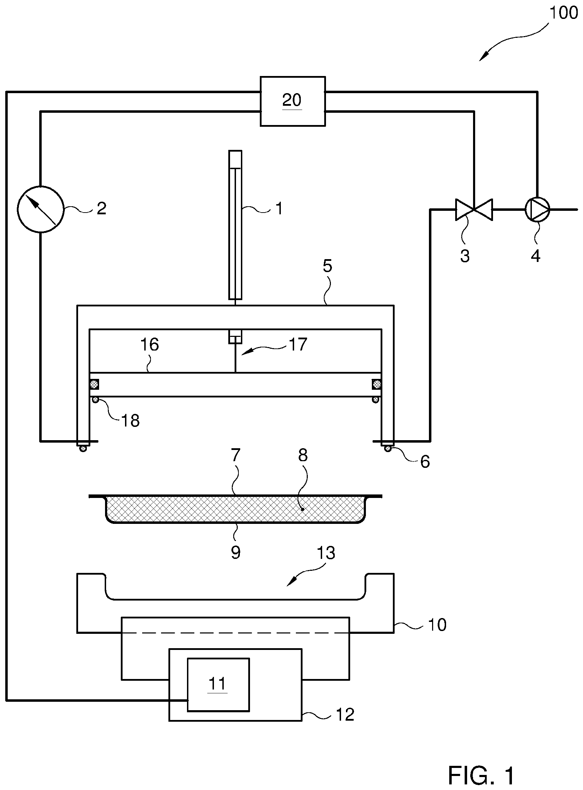

Figures 1, 2, and 3 show a schematic representation of a first example of an apparatus 100 for testing leak tightness. The apparatus 100 comprises a receptacle 10 and a lid 5. In this example the lid 5 is provided with an O-ring 6 for providing a sealing engagement with the receptacle 10. The apparatus is further provided with an movable element 16, in this example a plunger, which is mounted to a driving member 17.

A package 8 is provided. In this example, the package 8 comprises a semi-rigid tray 9. The tray 9 can be filled with a product such as a food product. On the open end the tray 9 is sealed with a flexible membrane peel seal 7.

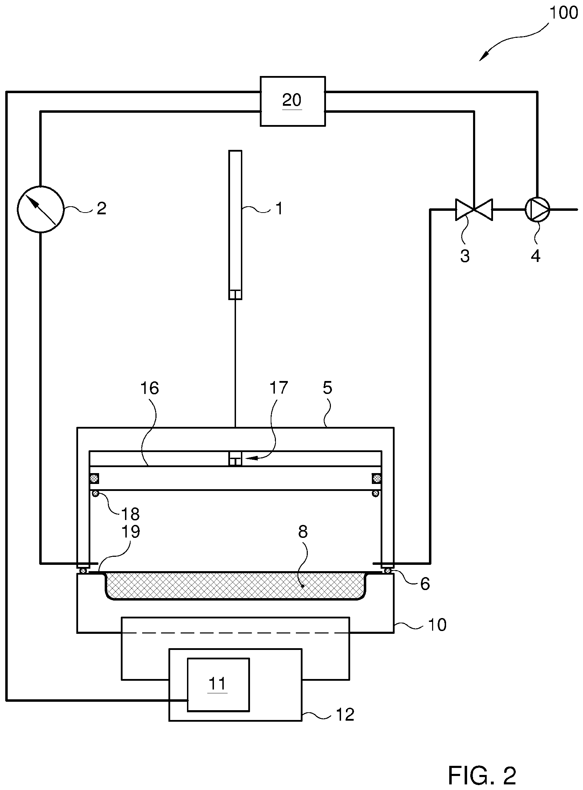

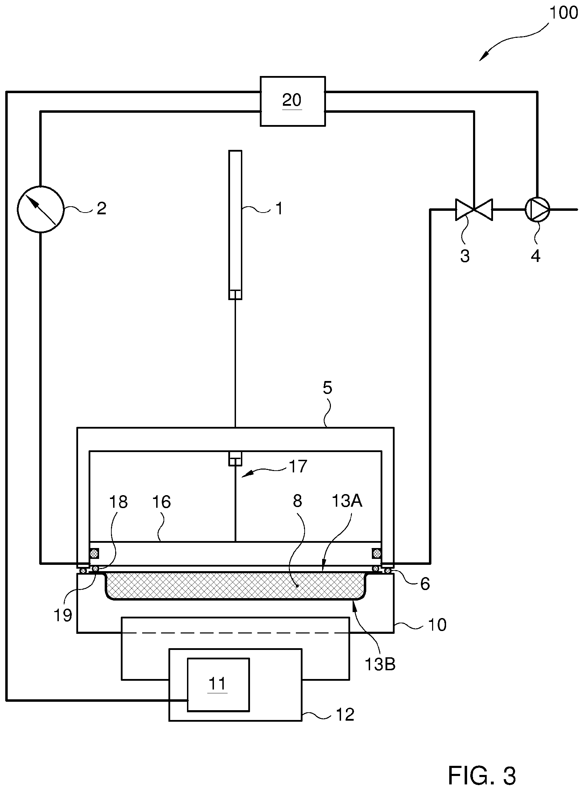

In use, the package 8 is placed in the receptacle 10. In this example, the receptacle 10 has a predetermined inner shape which is complementary to the outer shape of the package 8. In this example, the inner shape of the receptacle 10 is complementary to the outer shape of the tray 9. When the package 8 is placed in the receptacle 10, the lid 5 is placed on the receptacle 10 so as to enclose the package 8 in a sealed chamber 13. In this example, the lid is pushed against the receptacle by means of a movement mechanism 1, here a pneumatic cylinder. The driving member 17 is arranged for moving the movable element 16 between a first and second position (shown respectively in Fig. 2 and 3).

In this example, both the lid 5 and the receptacle 10 are substantially rigid. Hence, good conformity of the inner shape of the chamber with the outer shape of the package 8 can easily be realised.

In Fig. 2 the lid 5 is moved to into sealing engagement with the receptacle 10. The movable element 16 is moved to the first position. It is also conceivable that the movable element 16 was already in the first position. In this position the chamber 13 has a first volume which is larger than volume of the package 7. Additionally, a seal edge 19 of the package is free.

Once the chamber is closed around the package 8 and the movable element 16 is moved to the first position, the pressure of gas in the chamber is modified. In this example, the pressure of gas in the chamber 13 is reduced by means of a pump 4. The pump 4 is in fluid communication with the chamber 13 via a valve 3. A pressure sensor 2 is provided for determining the gas pressure inside the chamber 13. Once the chamber 13 is at a desired underpressure, the valve 3 is closed. The apparatus 100 includes a processor 20. The pressure sensor 2 is communicatively connected to the processor 20. The processor 20 is arranged to receive a value of gas pressure inside the chamber 13 from the pressure sensor 2. The processor can monitor the gas pressure inside the chamber 13. In this example, the processor 20 is also arranged for controlling the movement mechanism 1 and the driving member 17.

When the movable element 16 is in the first position, the peel strength can be tested. In this example, the peel strength test is performed as a pass/fail test. Peel strength is not tested by peeling the peel seal, as this would result in destruction of the peel seal. Instead, a non-destructive test is applied for testing the peel strength. The peel seal is submitted to a predetermined underpressure. If the peel strength of the peel seal under test is high enough (pass), the peel seal will not be separated by the predetermined underpressure. If the peel strength of the peel seal under test is not high enough (fail), the peel seal will be separated by the predetermined underpressure. Normal peel seals can have a peel strength that corresponds to a threshold underpressure of 500-700 mbar at which the peel seal separates. Nowadays also easy-peel seals are being used. These easy-peel seals can have a peel strength that corresponds to a threshold underpressure of 400-200 mbar at which the peel seal separates.

In the non-destructive peel strength test in this example, the pressure in the chamber 13 is reduced to 700 mbar, i.e. an underpressure of 300 mbar, by means of the pump 4. With this pressure difference the easy peel seal should hold. It the easy-peel seal does not separate from the tray 9, the pressure in the chamber 13 remains substantially constant. However, if the pressure changes suddenly, this is an indication that the easy-peel seal has released and that the seal has failed. The processor 20 is in this example arranged to monitor the pressure signal of the pressure sensor 2 and to determine whether or not the peel seal withstands the underpressure. At this point it may be desirable to stop the test and to discard the faulty package if the processor 20 indicates that the peel seal has released.

On the other hand if the peel seal passes the peel strength test, the movable element 16 is moved into the second position depicted in Figure 3 for performing a leak test. In this position, the securing member 18 of the movable element 16 secures the seal edge 19 of the package 8, e.g. clamps the seal edge 19. In the second position, the shape of the chamber 13 is complementary to the outer shape of the package 8, and a free volume of gas in the chamber 13 surrounding the package is minimized.

The securing member 18 can be arranged to sealingly abut against the peel seal membrane. In that case, the leak tightness of the peel seal membrane 7 is tested. It is also possible that the securing member 18 includes passages allowing air to flow from the part 13A of the chamber adjacent the membrane 7 to the part 13B of the chamber adjacent the tray 9. The securing member can thereto for instance include radial passages. In that case, the leak tightness of the package 8 as a whole including the peel seal membrane 7 is tested.

The pressure of gas in the chamber is again modified in order to test the leak tightness of the package 8. In this example, the pressure in the chamber 13 is reduced to 200 mbar, i.e an underpressure of 800 mbar. It will be appreciated that the securing member 18 securing the seal edge 19 prevents the peel seal from separating, while a leak test can be provided at a reduced pressure. More in general, the pressure in the chamber during the leak test will be lower than during the peel strength test. Preferably, the pressure in the chamber during the leak test is lower than a threshold value below which the peel seal is supposed to separate.

If the pressure determined by the pressure sensor 2 rises over time, this provides an indication that the package 8 is leaking. Such a rise in pressure can be indicative of an outflow of gas from the package 8. It will be appreciated that any variation of pressure over time indicates a degree of leaking. It is of course possible that a certain degree of leakage is allowed, so that determination of leakage not necessarily is equivalent to rejection of the package. The processor 20 may compare the change of pressure (over time) with a predetermined threshold value. If the change exceeds the threshold value the processor may indicate that the package displays leakage to such extent that the package should be rejected. The processor 20 may e.g. calculate an inflow or outflow of gas per unit time into or out of the package 8 and compare the calculated inflow or outflow with a threshold value for the inflow or outflow.

Since the inner shape of the chamber 13 is complementary to the outer shape of the package 8 when the movable member 16 is in the second position, a volume of free space between the package and the receptacle 10 and the lid 5, respectively, is very small. This provides the advantage that only a very small amount of gas needs to be pumped out of the chamber for achieving the desired underpressure. Also, the small volume of free space makes that the determination of pressure change over time due to leakage is very accurate.

In this example, the receptacle 10 is made of brass. Hence, the receptacle 10 has a large heat capacity. The large heat capacity provides the additional advantage that the temperature of the small volume of gas in the chamber 13 is mainly determined by the temperature of the receptacle 10 and to a much lesser degree by a temperature of the ambient air or the temperature of the package 8. Hence, the temperature of the package 8 or the ambient air has a reduced impact on the accuracy of the determination of the pressure inside the chamber 13, and thus on the accuracy of the leak detection. Also, a waiting time, required for allowing the temperature of the gas in the chamber 13 to reach an equilibrium value is reduced.

In Figures 1,2, and 3 the apparatus 100 is further provided with a heating and/or cooling system 12. It will be appreciated that the heating and/or cooling system is optional. The heating and/or cooling system 12 includes a temperature controller 11. The temperature controller 11 is arranged for maintaining the temperature of the receptacle 10 at a predetermined temperature. This provides the advantage that the temperature of the small volume of gas in the chamber 13 is mainly determined by the controlled temperature of the receptacle 10 and to a much lesser degree by a temperature of the ambient air or the temperature of the package 8.

In an embodiment, the heating and/or cooling system 12 is used for compensating for thermal artefacts. The temperature controller 11 may thereto be communicatively connected to the processor 20. Such thermal artefacts arise e.g. when the temperature of gas present in the volume of free space rises during the measurement. In such case the measured pressure increases, whereas no outflow from the package may be present. The temperature controller 11 may be arranged to change the temperature of the receptacle 10 during the measurement such that the temperature of the gas present in the volume of free space remains constant. It is possible to determine the required temperature change (curve) by suitably calibrating the apparatus 100. Part of such calibration may be measuring the pressure with a dummy package which is guaranteed free of leakage present in the chamber 13.

It will be appreciated that artefacts may also arise due to inflow or outflow of gas into or out of the package itself. The processor 20 may thereto be communicatively connected to and arranged to control the valve 3 and/or pump 4 to counteract such inflow or outflow, e.g. by allowing a compensating outflow or inflow, respectively, via the valve 3.

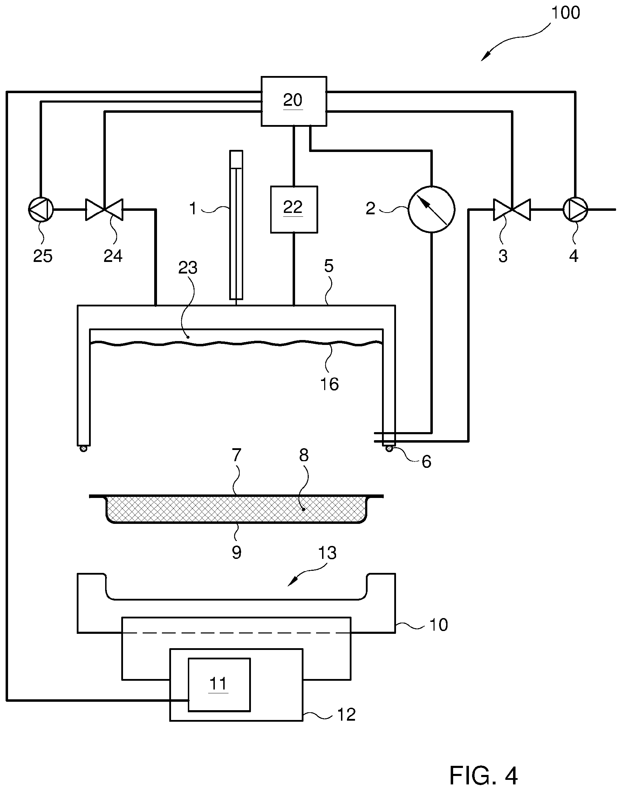

Figures 4, 5, and 6 show a schematic representation of an apparatus 100 for testing leak tightness similar to the apparatus shown in Figures 1, 2, and 3. The apparatus 100 in Figures 4, 5 and 6 is further provided with a temperature sensor 22. The temperature sensor 22 is communicatively connected to the processor 20. The processor 20 is arranged to receive a value of temperature inside the chamber 13 from the temperature sensor 22. The processor 20 is further arranged for correcting the value of the gas pressure received from the pressure sensor 2, or a value of a determined leak tightness, on the basis of the value of the gas temperature. Such correcting may include calculating an equivalent pressure at a reference temperature, e.g. 20 °C.

In the example, the temperature sensor 22 is mounted to the lid 5 with a thermal insulator interposed between the lid 5 and the temperature sensor 22. This provides the advantage that the temperature sensor 22 measures the true temperature of the gas in the chamber 13. Also, this allows the temperature sensor 22 to react to changes in gas temperature much faster. It will be appreciated that it is also possible that the temperature sensor 22 is mounted to the receptacle 10 with a thermal insulator interposed between the receptacle 10 and the temperature sensor 22.

In addition, the movable element 16 is, in this example, a movable membrane. The movable element 16 and the lid 5 form a second chamber 23, which is in fluid communication with a second valve 24 and a second pump 25. The second pump 25 is arranged for increasing and/or decreasing a volume of second chamber. The second valve 24 and the second pump 25 are communicatively connected to the processor 20. It will be appreciated that it is also possible that the second valve 24 is in communication with the pump 4 so that the second pump 25 can be omitted.

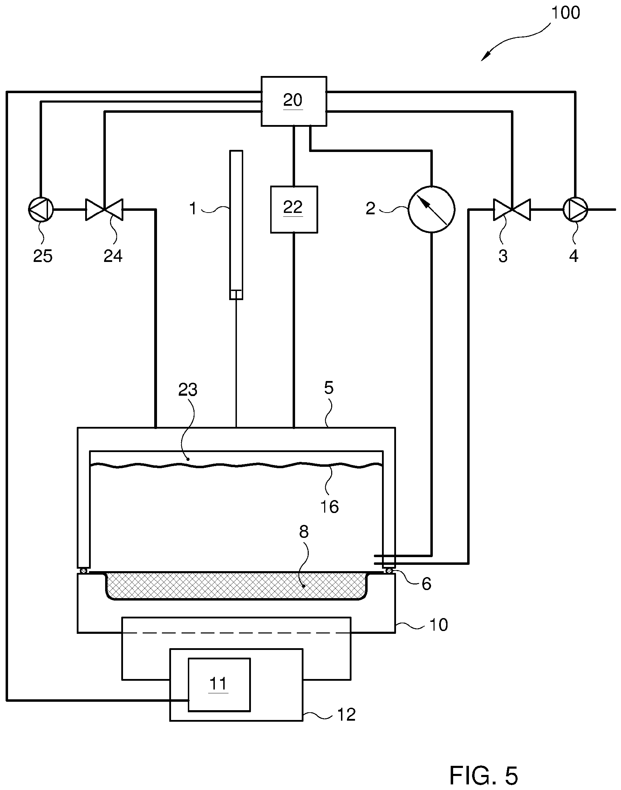

In Figure 5 the movable membrane 16 is shown in the first position. The first position is reached by activating the second pump 25 and removing air inside the second chamber 23. When the chamber 13 is sufficiently shaped, the second valve 24 is shut. Thereby holding the membrane 16 in the first position. With the movable membrane in the first position the peel strength test can be performed as described with respect to Figs. 1-3.

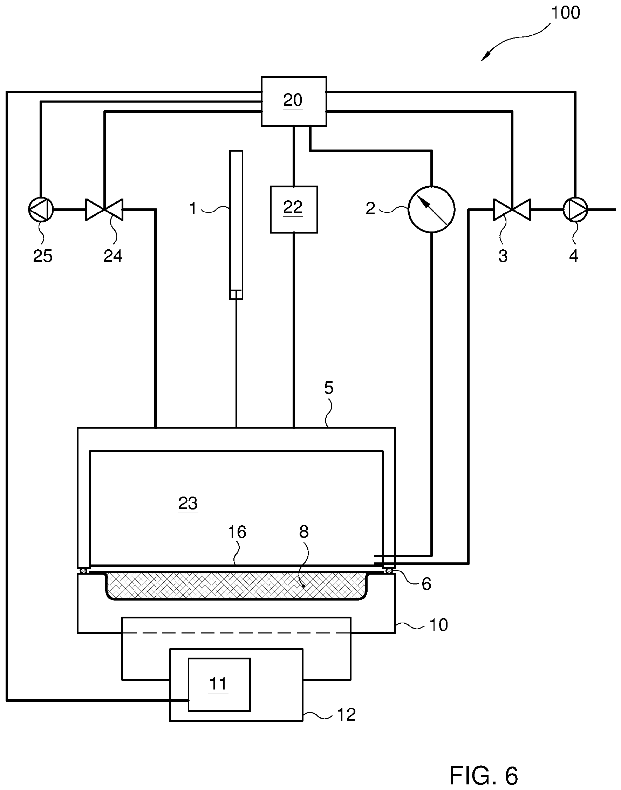

After completion of the peel strength test, the second valve 24 is opened, and the second pump 25 is activated. Air is blown into the second chamber 23 causing the volume of the first chamber 13 to change. As more air is pumped into the second chamber 23, the shape of the first chamber 13 becomes complementary to the outer shape of the package 8. This is depicted in Figure. 6. After the movable membrane 16 has moved to the second position, the leak tightness test is performed as described with respect to Figs. 1-3.

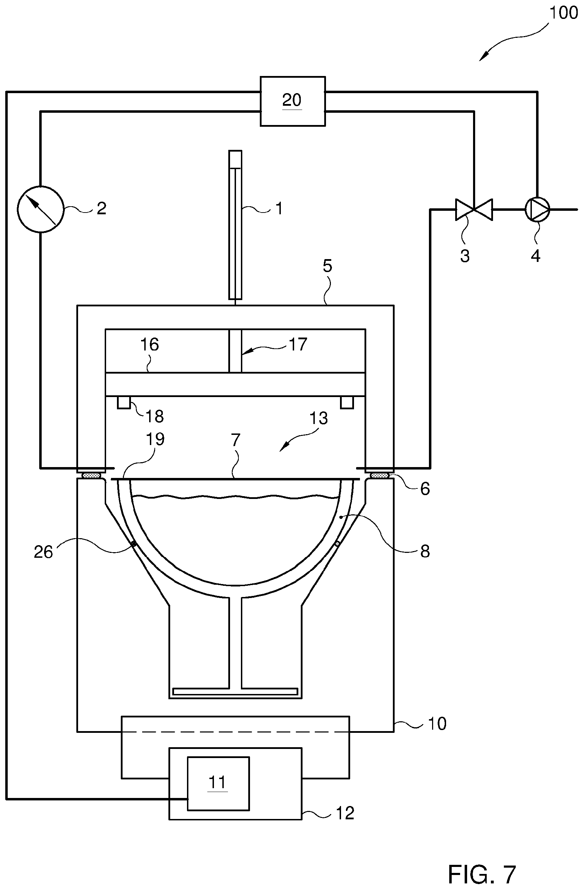

Figure 7 shows a schematic representation of an apparatus 100 for testing peel strength and leak tightness similar to the apparatus shown in the previous figures. In this example, the apparatus 100 has been adapted for peel strength and leak testing of a wine glass sealed by a peel seal 7. As depicted in Figure 7, the receptacle 10 is complementary to the outer shape of the wine glass. An additional sealing member 26 can be provided to reduce the volume of the chamber 13. This decreases the closed off volume of the chamber 13. This provides the advantage that only a very small amount of gas needs to be pumped out of the chamber 13 for achieving the desired underpressure. Securing member 18 is arranged to secure the seal edge 19 of the peel seal 7 and the wine glass 8. In this example, the securing member comprises radial passages to allow air to pass the securing member 18, while the securing member still presses on the seal edge 19 to avoid release of the peel seal in the second position.

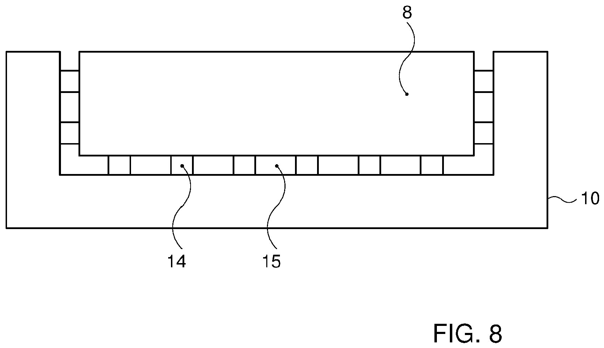

Figure 8 shows a schematic representation of a detail of an apparatus 100 for testing leak tightness of the package 8. Figure 8 shows the package 8 in relation to the receptacle 10. It will be appreciated that the detail of Figure 8 may be implemented in the apparatus of Figures 1-7.

In Figure 8, the inner shape of the receptacle 10 comprises a plurality of bosses 14. In between the bosses 14 a network of interconnected grooves 15 is formed. The outer surface of the package 8 abuts against the bosses 14. Therefore, the interconnected grooves 15 form small volume of gas surrounding the package 8. It is this small volume that is to be evacuated by the pump 4. Since the grooves 15 are interconnected, gas can easily flow within the grooves so as to allow easy evacuation. Nevertheless, since the package 8 abuts against the plurality of bosses 8, the package is supported by the receptacle over substantially its entire surface.

Preferably, a height of the surface structure, here the bosses, is small so as to limit the size of the free volume of gas in the chamber 13 when the package 8 is contained in the chamber 13. Preferably a height of the surface structure is between 0.01 and 0.5 mm, more preferably between 0.1 and 0.3 mm.

It will be appreciated that the surface structure aids both in limiting the size of the free volume of gas and in providing that the receptacle is in good thermal contact with the free volume of gas. It will be clear that these combined aspects further improve accuracy and speed of the leak detection.

In the foregoing, the invention has been described with reference to specific examples of embodiments of the invention. It will, however, be evident that various modifications and changes may be made therein, without departing from the essence of the invention.

In the example, the lid is provided with a seal in the form of an O-ring. It will be clear that any seal can be used instead of the O-ring. It will also be clear that alternatively, or additionally, the receptacle can be provided with a seal.

In the example the receptacle 10 has a large heat capacity. In general, the receptacle comprises, or is substantially made of, a material having a large specific heat capacity, such as brass or another metal. Preferably, said material has a larger specific heat capacity than the material of which the package is made.

It is also possible that the receptacle has a small heat capacity. The small heat capacity provides the additional advantage that the temperature of the small volume of gas in the chamber is mainly determined by the temperature of the package and to a much lesser degree by a temperature of the ambient air or a temperature of the receptacle. In general, the receptacle can comprise, or be substantially made of, a material having a small specific heat capacity, such as a plastics material. Preferably, said material has a small specific heat capacity than the material of which the package is made.

In the example of Figure 7 a wine glass is depicted. The wine glass can either be empty or be filled with a drink such as wine It will be appreciated that the invention can be used for other packages such as glasses of other type, bowls, plates, filled or empty.

In the example of Figure 8, the receptacle comprises a plurality of bosses. It is also possible that the surface of the inner shape of the receptacle is provided with a mesh, a porous foil, a sintered foil, a napped foil and/or ridges. Such surface structure may be provided e.g. by etching, milling, scraping or sandblasting. Alternatively such structure may be provided by gluing, fitting or welding structure elements onto the surface. More in general, the surface of the inner shape of the receptacle has a surface texture to ensure the presence of a coherent inner space between the receptacle and the package.

However, other modifications, variations, and alternatives are also possible. The specifications, drawings and examples are, accordingly, to be regarded in an illustrative sense rather than in a restrictive sense.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. Method for testing peel strength and leak tightness of a package (8) including a peel seal (7), comprising the steps of:
- providing a receptacle (10) and a lid (5) for closing the receptacle, the lid and receptacle enclosing a chamber (13) for holding the package,
- placing the package inside the chamber,
- modifying the chamber to have a first volume that is larger than an outer shape of the package,
- reducing a gas pressure inside the chamber to a first pressure level,
- determining whether the peel strength of the peel seal (7) is sufficient to withstand the first pressure level,
- modifying the chamber to have a second volume that is complementary to the outer shape of the package,
- while securing the peel seal of the package, reducing a gas pressure inside the chamber to a different, second pressure level, and determining the gas pressure inside the chamber, and
- determining the leak tightness of the package on the basis of the determined gas pressure inside the chamber.

2. Method according to claim 1, wherein the peel strength of the package (8) is determined prior to determining the leak tightness of the package.

3. Method according to claim 1 or 2, wherein the second pressure level is smaller than the first pressure level.

4. Method according to any one of claims 1-3, wherein after the step of placing the package inside the receptacle, the receptacle remains closed for the remainder of the method.

5. Method according to any one of claims 1-4, wherein the package is a food container or a beverage container, preferably containing a food product or a beverage, respectively, such as a single serving beverage container, for instance a glass of wine.

6. Apparatus (100) for testing peel strength and leak tightness of a package (8) having a peel seal (7), comprising:
- a receptacle (10) for receiving the package,
- a lid (5) for closing the receptacle (10), the lid and receptacle enclosing a chamber (13) for holding the package,
- a movable element (16) arranged to be positioned in a first position and in a second position,
wherein in the first position the chamber (13) has a first volume that is larger than an outer volume of the package such that, in use, the peel seal (7) of the package in the receptacle is free to release, and
in the second position the chamber (13) has a second volume that is complementary to the outer shape of the package,
- a securing member (18) arranged for securing the peel seal (7) of the package when the movable element (16) is in the second position,
- a pump (4) for reducing a gas pressure inside the chamber, and
- a pressure sensor (2) for determining the gas pressure inside the chamber, and
- a processor (20) arranged receiving a value of gas pressure inside the chamber from the pressure sensor, wherein the processor is arranged for determining a peel strength of the package from the value of the gas pressure when the movable element is in the first position, and wherein the processor is arranged for determining whether the package is leaking or airtight from the value of the gas pressure when the movable element is in the second position.

7. Apparatus (100) according to claim 6, wherein the securing member (18) includes passages to allow an area (13A) of the chamber adjacent to the seal to be in fluid communication with an area (13B) of the chamber adjacent to the remainder of the package.

8. Apparatus (100) according to any one of claims 6 or 7, wherein the movable element (16) is a plunger, the apparatus further including a driving member (17) arranged for moving the plunger from the first position to the second position.

9. Apparatus (100) according to any one of claims 6 or 7, wherein the movable element is a membrane, wherein the apparatus includes a second chamber (23) at the side of the membrane opposite the chamber, and wherein the apparatus further is arranged for increasing and/or decreasing a volume of the second chamber.

10. Apparatus (100) according to any one of claims 6-9, wherein the processor (20) is arranged for controlling a pressure of gas in the chamber, preferably to be at a first level when the movable element is in the first position and to be at a different second level when the movable element is in the second position, wherein the first level is chosen to be representative of a peel strength of the peel seal to be tested, and wherein the second level is chosen to be lower than the first level.

11. Apparatus (100) according to any one of claims 6-10, wherein the receptacle (10) is provided with a heating and/or cooling system (12), preferably including a temperature controller (11) arranged for maintaining the temperature of the receptacle.

12. Apparatus (100) according to any one of claims 6-11, wherein the inner shape of the receptacle has a surface texture to ensure the presence of a coherent inner space between the receptacle and the package, and/or wherein the inner shape of the receptacle is provided with at least one of a mesh, a porous foil, a sintered foil, a napped foil, grooves, ridges and bosses.

13. System for testing peel strength and leak tightness of a package (8) including a peel seal (7), the system comprising an apparatus (100) according to any one of claims 6-12 and a package (8) in combination.

14. System according to claim 13, wherein the package (8) is a food container or a beverage container, preferably containing a food product or a beverage, respectively, such as a single serving beverage container, for instance a glass of wine.

## Patentansprüche

1. Verfahren zum Testen der Schälfestigkeit und Dichtigkeit einer Verpackung (8), einschließend einen abschälbaren Verschluss (7), umfassend die Schritte von:
- Bereitstellen eines Behälters (10) und eines Deckels (5) zum Verschließen des Behälters, der Deckel und Behälter umschließend eine Kammer (13) zum Aufnehmen der Verpackung,
- Platzieren der Verpackung in der Kammer,
- Verändern der Kammer, um ein erstes Volumen zu haben, das größer ist als eine äußere Form der Verpackung,
- Reduzieren eines Gasdrucks in der Kammer auf ein erstes Druckniveau,
- Bestimmen, ob die Schälfestigkeit des abschälbaren Verschlusses (7) ausreichend ist, um dem ersten Druckniveau standzuhalten,
- Verändern der Kammer, um ein zweites Volumen zu haben, das komplementär zu der äußeren Form der Verpackung ist,
- während der abschälbare Verschluss der Verpackung gesichert wird, Reduzieren eines Gasdruck in der Kammer auf ein anderes, zweites Druckniveau und Bestimmen des Gasdrucks in der Kammer, und
- Bestimmen der Dichtigkeit der Verpackung basierend auf dem bestimmten Gasdruck in der Kammer.

2. Verfahren nach Anspruch 1, wobei die Schälfestigkeit der Verpackung (8) vor dem Bestimmen der Dichtigkeit der Verpackung bestimmt wird.

3. Verfahren nach Anspruch 1 oder 2, wobei das zweite Druckniveau kleiner ist als das erste Druckniveau.

4. Verfahren nach einem der Ansprüche 1-3, wobei nach dem Schritt des Platzierens der Verpackung in dem Behälter der Behälter für den Rest des Verfahrens geschlossen bleibt.

5. Verfahren nach einem der Ansprüche 1-4, wobei die Verpackung ein Lebensmittelbehälter oder ein Getränkebehälter ist, bevorzugt enthaltend ein Lebensmittelprodukt bzw. ein Getränk, wie etwa ein Einweggetränkebehälter, zum Beispiel ein Glas Wein.

6. Vorrichtung (100) zum Testen der Schälfestigkeit und Dichtigkeit einer Verpackung (8) mit einem abschälbaren Verschluss 7), umfassend:
- einen Behälter (10) zum Aufnehmen der Verpackung,
- einen Deckel (5) zum Verschließen des Behälters (10), der Deckel und Behälter umschließend eine Kammer (13) zum Aufnehmen der Verpackung,
- ein bewegliches Element (16), angeordnet um in einer ersten Position und in einer zweiten Position positioniert zu werden,
wobei in der ersten Position die Kammer (13) ein erstes Volumen hat, das größer ist als ein äußeres Volumen der Verpackung, sodass, bei Verwendung, der abschälbare Verschluss (7) der Verpackung in dem Behälter frei zur Abgabe ist und
in der zweiten Position die Kammer (13) ein zweites Volumen hat, das komplementär zu der äußeren Form der Verpackung ist,
- ein Sicherungsglied (18), angeordnet zum Sichern des abschälbaren Verschlusses (7) der Verpackung, wenn das bewegliche Element (16) in der zweiten Position ist,
- eine Pumpe (4) zum Reduzieren eines Gasdrucks in der Kammer und
- einen Drucksensor (2) zum Bestimmen des Gasdrucks in der Kammer und
- einen Prozessor (20), angeordnet zum Empfangen eines Werts eines Gasdrucks in der Kammer von dem Drucksensor, wobei der Prozessor angeordnet ist zum Bestimmen einer Schälfestigkeit der Verpackung anhand des Werts des Gasdrucks, wenn das bewegliche Element in der ersten Position ist, und wobei der Prozessor angeordnet ist zum Bestimmen, ob die Verpackung leck- oder luftdicht ist, anhand des Werts des Gasdrucks, wenn das bewegliche Element in der zweiten Position ist.

7. Vorrichtung (100) nach Anspruch 6, wobei das Sicherungsglied (18) Durchgänge umfasst, die es einem Bereich (13A) der Kammer neben dem Verschluss erlauben, in Flüssigkeitskommunikation mit einem Bereich (13B) der Kammer neben dem Rest der Verpackung zu sein.

8. Vorrichtung (100) nach einem der Ansprüche 6 oder 7, wobei das bewegliche Element (16) ein Kolben ist, die Vorrichtung ferner umfassend ein antreibendes Glied (17), angeordnet zum Bewegen des Kolbens von der ersten Position zu der zweiten Position.

9. Vorrichtung (100) nach einem der Ansprüche 6 oder 7, wobei das bewegliche Element eine Membran ist, wobei die Vorrichtung eine zweite Kammer (23) an der Seite der Membran gegenüber der Kammer umfasst und wobei die Vorrichtung ferner angeordnet ist zum Vergrößern und/oder Verkleinern eines Volumens der zweiten Kammer.

10. Vorrichtung (100) nach einem der Ansprüche 6-9, wobei der Prozessor (20) angeordnet ist zum Regeln eines Gasdrucks in der Kammer, bevorzugt um auf einem ersten Niveau zu sein, wenn das bewegliche Element in der ersten Position ist, und um auf einem anderen zweiten Niveau zu sein, wenn das bewegliche Element in der zweiten Position ist, wobei das erste Niveau gewählt ist, um repräsentativ für eine Schälfestigkeit des zu testenden abschälbaren Verschlusses ist, und wobei das zweite Niveau gewählt ist, um niedriger zu sein als das erste Niveau.

11. Vorrichtung (100) nach einem der Ansprüche 6-10, wobei der Behälter (10) versehen ist mit einem Heiz- und/oder Kühlsystem (12), bevorzugt einschließend einen Temperaturregler (11), angeordnet zum Aufrechterhalten der Temperatur des Behälters.

12. Vorrichtung (100) nach einem der Ansprüche 6-11, wobei die innere Form des Behälters eine Oberflächentextur aufweist, um das Vorhandensein eines kohärenten Innenraums zwischen dem Behälter und der Verpackung sicherzustellen, und/oder wobei die innere Form des Behälters versehen ist mit mindestens einem von einem Gewebe, einer porösen Folie, einer gesinterten Folie, einer haarigen Folie, Rillen, Graten und Buckeln.

13. System zum Testen von Schälfestigkeit und Dichtigkeit einer Verpackung (8), umfassend einen abschälbaren Verschluss (7), das System umfassend eine Vorrichtung (100) nach einem der Ansprüche 6-12 und einer Verpackung (8) in Kombination.

14. System nach Anspruch 13, wobei die Verpackung (8) ein Lebensmittelbehälter oder ein Getränkebehälter ist, bevorzugt enthaltend ein Lebensmittelprodukt bzw. ein Getränk, wie etwa ein Einweggetränkebehälter, zum Beispiel ein Glas Wein.

## Revendications

1. Méthode de test de résistance au pelage et d'étanchéité d'un emballage (8) comprenant un joint pelable (7), comprenant les étapes consistant à :
- prévoir un réceptacle (10) et un couvercle (5) pour fermer le réceptacle, le couvercle et le réceptacle renfermant une chambre (13) destinée à contenir l'emballage,
- placer l'emballage à l'intérieur de la chambre,
- modifier la chambre pour avoir un premier volume qui est plus grand qu'une forme extérieure de l'emballage,
- réduire une pression de gaz à l'intérieur de la chambre à un premier niveau de pression,
- déterminer si la résistance au pelage du joint pelable (7) est suffisante pour faire face au premier niveau de pression,
- modifier la chambre pour avoir un second volume qui est complémentaire de la forme extérieure de l'emballage,
- tout en fixant le joint pelable de l'emballage, réduire une pression de gaz à l'intérieur de la chambre à un second niveau de pression différent, et déterminer la pression de gaz à l'intérieur de la chambre, et
- déterminer l'étanchéité de l'emballage sur la base de la pression de gaz déterminée à l'intérieur de la chambre.

2. Méthode selon la revendication 1, dans laquelle la résistance au pelage de l'emballage (8) est déterminée avant la détermination de l'étanchéité de l'emballage.

3. Méthode selon la revendication 1 ou 2, dans laquelle le second niveau de pression est inférieur au premier niveau de pression.

4. Méthode selon l'une quelconque des revendications 1 à 3, dans laquelle, après l'étape consistant à placer l'emballage à l'intérieur du réceptacle, le réceptacle reste fermé pendant le reste de la méthode.

5. Méthode selon l'une quelconque des revendications 1 à 4, dans lequel l'emballage est un récipient pour aliments ou un récipient à boisson, contenant de préférence un produit alimentaire ou une boisson, tel qu'un récipient à boisson à portion individuelle, par exemple un verre de vin.

6. Appareil (100) pour tester une résistance au pelage et une étanchéité d'un emballage (8) ayant un joint pelable (7), comprenant :
- un réceptacle (10) pour recevoir l'emballage,
- un couvercle (5) pour fermer le réceptacle (10), le couvercle et le réceptacle renfermant une chambre (13) destinée à contenir l'emballage,
- un élément mobile (16) conçu pour être positionné dans une première position et dans une seconde position,
dans lequel, dans la première position, la chambre (13) a un premier volume qui est supérieur à un volume extérieur de l'emballage, de telle sorte, qu'en utilisation, le joint pelable (7) de l'emballage dans le réceptacle est libre de se libérer, et
dans la seconde position, la chambre (13) présente un second volume complémentaire de la forme extérieure de l'emballage,
- un élément de fixation (18) conçu pour fixer le joint pelable (7) de l'emballage lorsque l'élément mobile (16) est dans la seconde position,
- une pompe (4) destinée à réduire la pression de gaz à l'intérieur de la chambre, et
- un capteur de pression (2) pour déterminer la pression de gaz à l'intérieur de la chambre, et
- un processeur (20) conçu pour recevoir du capteur de pression une valeur de pression de gaz à l'intérieur de la chambre, dans lequel le processeur est conçu pour déterminer une résistance au pelage de l'emballage d'après la valeur de la pression de gaz lorsque l'élément mobile est dans la première position, et dans lequel le processeur est conçu pour déterminer si l'emballage présente une fuite ou est étanche à l'air d'après la valeur de la pression de gaz lorsque l'élément mobile est dans la seconde position.

7. Appareil (100) selon la revendication 6, dans lequel l'élément de fixation (18) comprend des passages pour permettre à une zone (13A) de la chambre adjacente au joint d'être en communication fluidique avec une zone (13B) de la chambre adjacente au reste de l'emballage.

8. Appareil (100) selon l'une quelconque des revendications 6 ou 7, dans lequel l'élément mobile (16) est un piston, l'appareil comprenant en outre un élément d'entraînement (17) conçu pour déplacer le piston de la première position à la seconde position.

9. Appareil (100) selon l'une quelconque des revendications 6 ou 7, dans lequel l'élément mobile est une membrane, dans lequel l'appareil comprend une seconde chambre (23) du côté de la membrane opposé à la chambre, et dans lequel l'appareil est en outre conçu pour augmenter et/ou diminuer un volume de la seconde chambre.

10. Appareil (100) selon l'une quelconque des revendications 6 à 9, dans lequel le processeur (20) est conçu pour commander une pression de gaz dans la chambre, de préférence pour être à un premier niveau lorsque l'élément mobile est dans la première position et pour être à un second niveau différent lorsque l'élément mobile est dans la seconde position, dans lequel le premier niveau est choisi pour être représentatif d'une résistance au pelage du joint pelable à tester, et dans lequel le second niveau est choisi pour être inférieur au premier niveau.

11. Appareil (100) selon l'une quelconque des revendications 6 à 10, dans lequel le réceptacle (10) est muni d'un système de chauffage et/ou de refroidissement (12), comprenant de préférence un régulateur de température (11) conçu pour maintenir la température du réceptacle.

12. Appareil (100) selon l'une quelconque des revendications 6 à 11, dans lequel la forme intérieure du réceptacle a une texture de surface pour assurer la présence d'un espace intérieur cohérent entre le réceptacle et l'emballage, et/ou dans lequel la forme intérieure du réceptacle est muni d'au moins l'un parmi un treillis, une feuille poreuse, une feuille frittée, une feuille à poils, des rainures, des nervures et des bosses.

13. Système de test de résistance au pelage et d'étanchéité d'un emballage (8) comprenant un joint pelable (7), le système comprenant un appareil (100) selon l'une quelconque des revendications 6 à 12 et un emballage (8) en combinaison.

14. Système selon la revendication 13, dans lequel l'emballage (8) est un récipient pour aliments ou un récipient à boisson, contenant de préférence un produit alimentaire ou une boisson, tel qu'un récipient à boisson à portion individuelle, par exemple un verre de vin.
